# EUROPÄISCHE PATENTSCHRIFT

(11) **EP 2 819 824 B1**
(45) Veröffentlichungstag und Bekanntmachung des Hinweises auf die Patenterteilung: **28.12.2016**
(21) Anmeldenummer: 13711586.1
(22) Anmeldetag: 01.03.2013
(51) Int. Cl.: B29C 45/14, B60N 2/68

(54) **VERFAHREN ZUR HERSTELLUNG EINER SITZLEHNENRÜCKWAND**
METHOD FOR PRODUCING A BACKREST REAR PANEL
PROCÉDÉ POUR FABRIQUER UNE PAROI ARRIÈRE DE DOSSIER DE SIÈGE

(30) Priorität: 02.03.2012 DE 102012004046
(43) Veröffentlichungstag der Anmeldung: 07.01.2015
(73) Patentinhaber: Johnson Controls GmbH, 51399 Burscheid (DE); Hyundai Motor Europe Technical Center GmbH, 65428 Rüsselsheim (DE)
(72) Erfinder: RIBARIC, David, 50735 Köln (DE); MEIER, Bernd, 57439 Attendorn (DE); NUYAN, Vedat, 42287 Wuppertal (DE); LINEMANN, Annett, 66121 Saarbrücken (DE); HÖFER, Carsten, 65451 Kelsterbach (DE); COULTON, Jerome, 63477 Maintal (DE); CLASSEN, Peter, 35619 Braunfels (DE)
(74) Vertreter: Finger, Catrin
(86) Internationale Anmeldenummer: PCT/EP2013/054117
(87) Internationale Veröffentlichungsnummer: WO 2013/127972

(56) Entgegenhaltungen:
- EP-A2- 2 272 706
- WO-A1-2011/036185
- WO-A1-2011/095399
- WO-A1-2012/032189
- DE-A1-102009 040 901
- BURKLE E ET AL: "VERBUNDBAUTEILE MIT MEHRPROZESSANLAGEN WIRTSCHAFTLICH HERSTELLEN", KUNSTOFFE, CARL HANSER VERLAG, MUNCHEN, DE, Bd. 81, Nr. 3, 1. März 1991 (1991-03-01), Seiten 192-198, XP000287480, ISSN: 0023-5563
- LANXESS: "Technische Information: Organoblech-die Innovation in der Hybridtechnik, Geringes Gewicht und hohe Festigkeit", INTERNET CITATION, 25. Februar 2009 (2009-02-25), Seiten 1-2, XP002664236, Gefunden im Internet: URL:http://techcenter.lanxess.com/scp/emea /de/docguard/TI_2009-003_DE_Organoblech.pd f?docId=12427922 [gefunden am 2011-11-23]
- ROLF LEONARD: "Einsatz von Organoblech forciert den Leichtbau in der Hybridtechnik; Bauteile immer komplexer und leichter", INTERNET CITATION, 23. August 2010 (2010-08-23), Seite 1, XP002664235, Gefunden im Internet: URL:http://www.autokon.de/home/-/article/1 6537511/29464061/Bauteile-immer-komplexer- und-leichter/art_co_INSTANCE_0000/maximize d/ [gefunden am 2011-11-23]

## Beschreibung

Die Erfindung betrifft ein Verfahren zur Herstellung einer Sitzlehnenrückwand nach den Merkmalen des Oberbegriffs des Anspruchs 1. Weiterhin betrifft die Erfindung eine Sitzlehnenrückwand aus zumindest einem Organoblech nach den Merkmalen des Oberbegriffs des Anspruchs 10.

Im Stand der Technik werden Sitzlehnenrückwände aus so genannten Organoblechen gefertigt. Organobleche sind endlosfaserverstärkte Thermoplastplatten. Da das Organoblech eine thermoplastische Matrix besitzt, kann es aufgeschmolzen und mit dem gleichen Thermoplast umspritzt werden. Hierbei wird zwischen zwei Verfahren unterschieden. Beim ersten Verfahren werden vorgeformte Organobleche in ein Spritzwerkzeug eingelegt und mit dem Thermoplast umspritzt. Beim zweiten Verfahren erfolgt die Umformung des Organoblechs direkt im Spritzwerkzeug.

Die DE 10 2009 039 404 A1 beschreibt ein Sitzelement, wie Sitz oder Rückenlehne für insbesondere einen Fahrzeugsitz, mit einer Grundstruktur, welche als eine Organoblechstruktur ausgebildet ist.

Die DE 10 2009 034 767 A1 beschreibt Organoblechstrukturbauteile in Hybridbauweise aus einem Organoblech, das mittels Thermoplasten verstärkt wird und für die Übertragung von hohen mechanischen Belastungen geeignet ist, wobei den Thermoplasten besondere Fließhilfsmittel zugegeben werden, um dessen physikalische Eigenschaften zu verbessern.

Darüber hinaus ist in der nachveröffentlichten WO 2012/032189 A1 ein Verfahren zur Herstellung einer Sitzlehnenrückwand aus zumindest einem Organoblech beschrieben. Das Organoblech wird in einem Spitzgusswerkzeug mit einer Rippenstruktur hinterspritzt, wobei zwischen Organoblech und Rippenstruktur eine stoffschlüssige Verbindung ausgebildet wird, so dass ein einstückiges Bauteil gebildet ist.

Der Erfindung liegt die Aufgabe zugrunde, ein gegenüber dem Stand der Technik verbessertes Verfahren zur Herstellung einer Sitzlehnenrückwand und eine verbesserte Sitzlehnenrückwand aus zumindest einem Organoblech anzugeben.

Hinsichtlich des Verfahrens wird die Aufgabe erfindungsgemäß durch ein Verfahren zur Herstellung einer Sitzlehnenrückwand mit den Merkmalen des Anspruchs 1 gelöst.

Hinsichtlich der Sitzlehnenrückwand wird die Aufgabe erfindungsgemäß durch eine Sitzlehnenrückwand aus zumindest einem Organoblech mit den Merkmalen des Anspruchs 10 gelöst.

Bevorzugte Ausgestaltungen und Weiterbildungen der Erfindung sind in den abhängigen Ansprüchen angegeben.

Beim Verfahren zur Herstellung einer Sitzlehnenrückwand aus zumindest einem Organoblech werden erfindungsgemäß in zumindest einem Organoblech mehrere Versteifungssicken und eine diese umlaufende rahmenförmige Sicke ausgeformt und wobei in einem Spritzwerkzeug eine Rippenstruktur in der umlaufenden rahmenförmigen Sicke rückseitig der Sitzlehnenrückwand derart angeformt wird, dass eine Rippenstruktur bündig mit der Rückseite der Sitzlehnenrückwand abschließt, so dass rückseitig der Sitzlehnenrückwand eine ebene Fläche ausgebildet ist, wobei zwischen Organoblech und Rippenstruktur eine stoffschlüssige Verbindung ausgebildet wird, so dass ein einstückiges Bauteil gebildet ist.

Dabei kann mittels der Rippenstruktur eine partielle Versteifung durch Hinterspritzung der Sitzlehnenrückwand erreicht werden. Sind bestimmte Lastpfade oder Krafteinleitungspunkte hohen Kräften ausgesetzt, so können diese durch zusätzliche Hinterspritzung, beispielsweise eine Wandaufdickung und/oder eine Verrippung, verstärkt werden.

Weiterhin kann eine Wandstärke gegenüber herkömmlichen Sitzlehnenrückwänden, bei gleicher Belastbarkeit der erfindungsgemäßen Sitzlehnenrückwand, verringert werden.

Mittels des Verfahrens hergestellte Sitzlehnenrückwände sind vorteilhafterweise gewichtsreduziert und besonders biegesteif.

Durch die Integration mehrerer Umform- und Ausformvorgänge, beispielweise Herstellung der Abkantungen und Laschen, Ausformung der Kopfstützenhülsen, Gurtumlenkungen und Schlossaufnahmen, in ein Spritzwerkzeug ist die Produktionszeit einer mittels des erfindungsgemäßen Verfahrens hergestellten Sitzlehnenrückwand signifikant verringert.

Weiterhin ist eine Gewichtseinsparung von bis zu 30 Prozent gegenüber herkömmlichen Sitzlehnenrückwänden ermöglicht.

Zweckmäßigerweise umfasst das Organoblech eine thermo-plastische Matrix und wird mit zumindest einer Rippenstruktur aus einem thermoplastischen Kunststoff verbunden, welcher mit dem Material des Organoblechs eine stoffschlüssige Verbindung ausbildet.

Um eine besonders biege- und/oder verwindungssteife Sitzlehnenrückwand zu erhalten, ist ein Querschnitt der Versteifungssicken und der rahmenförmigen Sicke halb- oder teilkreisförmig oder rechteckig mit verrundeten Kanten ausgeformt.

Zur weiteren Erhöhung Festigkeit und Verwindungssteifigkeit sind innerhalb der Rippenstruktur die einzelnen Rippen überkreuzt angeordnet.

Besonders bevorzugt ist die Rippenstruktur zumindest bereichs- oder abschnittsweise mit einem eben oder plattenförmig ausgebildeten Abdeckelement abdeckbar, welches stoffschlüssig an Sitzlehnenrückwand und Rippenstruktur angeordnet wird.

Dabei wird das Abdeckelement vorteilhafterweise derart mit der innerhalb der rahmenförmigen Sicke angeordneten Rippenstruktur verklebt oder verschweißt, dass ein geschlossenes Profil entsteht, welches eine erhöhte Torsionssteifigkeit aufweist und somit die gesamte Sitzlehnenrückwand versteift.

Zweckmäßigerweise wird das Abdeckelement aus einem Organoblech gleichen Materials oder aus einem Strang-, Profil- oder Spritzguss aus einem thermoplastischen Kunststoff mit ähnlichen oder vergleichbaren Eigenschaften wie das Material des Organoblechs gebildet. Dadurch ist eine einfache stoffschlüssige Anordnung des Abdeckelements am Organoblech durch abschnittsweises Aufschmelzen von Abdeckelement und Organoblech ermöglicht.

Besonders vorteilhafterweise wird eine Umformung des Organoblechs zur Ausbildung der Versteifungssicken und der umlaufenden rahmenförmigen Sicke direkt im Spritzwerkzeug durchgeführt. Dadurch sind eine Werkzeuganzahl und eine Anzahl an Verarbeitungsschritten signifikant reduziert.

Besonders bevorzugt werden einzelne Rippen entlang ihres Verlaufs verzweigt ausgebildet, so dass deren Ausbildung in Abhängigkeit der im Betrieb der Sitzlehnenrückwand auftretenden Lastfälle und deren Lastpfaden erfolgen kann.

Zur weiteren Versteifung der Sitzlehnenrückwand werden in einer vorteilhaften Ausführungsform im Bereich von Anschlussgeometrien, wie beispielsweise Kopfstützenhülsen, Aufnahmebereichen für eine Gurtumlenkung, Aufnahmen für eine Gurtaufrollvorrichtung und/oder Schlossaufnahmebereiche, flächig ausgeformte Hinterspritzungen und/oder Materialverstärkungen am Organoblech und/oder der Rippenstruktur angeordnet oder ausgeformt.

Bei der Sitzlehnenrückwand aus zumindest einem Organoblech sind erfindungsgemäß in zumindest einem Organoblech mehrere Versteifungssicken und eine diese umlaufende rahmenförmige Sicke ausgeformt und eine Rippenstruktur ist in der umlaufenden rahmenförmigen Sicke rückseitig der Sitzlehnenrückwand derart angeformt, dass eine Rippenstruktur bündig mit der Rückseite der Sitzlehnenrückwand abschließt, so dass rückseitig der Sitzlehnenrückwand eine ebene Fläche ausgebildet ist, wobei zwischen Organoblech und Rippenstruktur eine stoffschlüssige Verbindung ausgebildet ist, so dass ein einstückiges Bauteil gebildet ist.

Anhand der beigefügten schematischen Figuren wird die Erfindung näher erläutert.

Dabei zeigen:
- Figur 1: schematisch eine perspektivische Darstellung einer mittels des erfindungsgemäßen Verfahrens hergestellten Sitzlehnenrückwand in einer Frontansicht,
- Figur 2: schematisch eine Rückansicht einer mittels des erfindungsgemäßen Verfahrens hergestellten Sitzlehnenrückwand,
- Figur 3: schematisch eine Rückansicht einer mittels des erfindungsgemäßen Verfahrens hergestellten Sitzlehnenrückwand mit einem Abdeckelement,
- Figur 4: schematisch eine Schnittdarstellung einer in der Sitzlehnenrückwand ausgeformten Rippenstruktur,
- Figur 5: schematisch eine Detailansicht von in der Sitzlehnenrückwand integrierten Kopfstützenhülsen sowie einer daran angeordneten Gurtumlenkung und
- Figur 6: schematisch eine Detailansicht von in der Sitzlehnenrückwand integrierten Kopfstützenhülsen sowie eines daran angeordneten Schlossaufnahmebereichs.

Einander entsprechende Teile sind in allen Figuren mit den gleichen Bezugszeichen versehen.

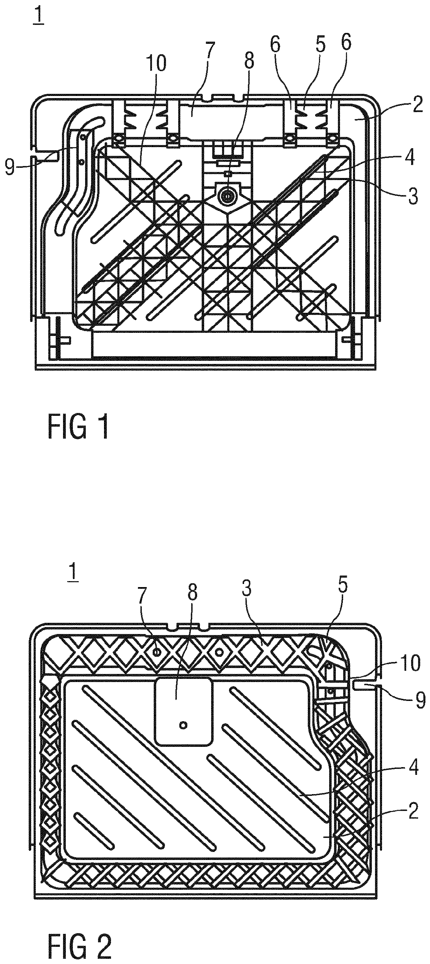

In Figur 1 ist schematisch eine perspektivische Darstellung einer mittels des erfindungsgemäßen Verfahrens hergestellten Sitzlehnenrückwand 1 in einer Frontansicht dargestellt.

Die Sitzlehnenrückwand 1 ist aus einem so genannten Organoblech 2 und einer Rippenstruktur 3 gebildet.

Das Organoblech 2 ist ein herkömmliches Organoblech. Ein Organoblech 2 ist ein flächiges Halbzeug aus einem thermoplastischen Kunststoff, in welchen ein Gewebe aus Glas-, Carbon- und/oder Aramidfasern oder einer Mischform aus diesen derart eingebracht ist, dass die Fasern vollständig mit thermoplastischem Kunststoff benetzt und umhüllt sind. Organobleche 2 sind somit endlosfaserverstärkte Thermoplastplatten. Organobleche 2 können durch Erwärmung und anschließendes Pressen in kurzen Zykluszeiten zu dreidimensionalen Bauteilen umgeformt werden.

Da das Organoblech 2 eine thermoplastische Matrix besitzt, kann es in einem nicht dargestellten Spritzwerkzeug aufgeschmolzen und mit gleichem Thermoplast umspritzt werden. Auf diese Weise wird die Rippenstruktur 3, welche aus dem gleichen thermoplastischen Kunststoff wie das Organoblech 2 besteht, auf das Organoblech 2 aufgebracht, so dass aus Organoblech 2 und Rippenstruktur 3 ein integriertes, somit einstückiges Bauteil gebildet ist.

Die Rippenstruktur 3 kann auf eine Vorderseite des Organoblechs 2 und somit der Sitzlehnenrückwand 1 aufgebracht werden.

Hierbei wird zwischen zwei Verfahren unterschieden. Beim ersten Verfahren wird das vorgeformte Organoblech 2 in ein Spritzwerkzeug eingelegt und mit dem thermoplastischen Kunststoff zur Ausbildung der Rippenstruktur 3 umspritzt. Beim zweiten Verfahren erfolgt die Umformung des Organoblechs 2 direkt im Spritzwerkzeug.

In der Rippenstruktur 3 können verschiedene Anschlussgeometrien, wie beispielsweise Kopfstützenhülsen 6, ein Aufnahmebereich 7 für eine Gurtumlenkung, eine Aufnahme 8 für eine Gurtaufrollvorrichtung und/oder ein Schlossaufnahmebereich 9 aus- oder angeformt werden.

In Figur 2 ist schematisch eine Rückansicht der mittels des erfindungsgemäßen Verfahrens hergestellten Sitzlehnenrückwand 1 dargestellt. Im Organoblech 2 sind mehrere Versteifungssicken 4 ausgeformt, welche von einer umlaufenden rahmenförmigen Sicke 5 umschlossen werden. Ein Querschnitt der Versteifungssicken 4 und der rahmenförmigen Sicke 5 ist insbesondere halb- oder teilkreisförmig oder rechteckig mit verrundeten Kanten ausgeformt.

Eine Anordnung der Versteifungssicken 4 im Organoblech 2 erfolgt analog zu der Anordnung der Versteifungssicken in einer herkömmlichen, aus Blech gefertigten Sitzlehnenrückwand. Dabei erstrecken sich die Versteifungssicken 4 diagonal über das Organoblech 2. Die Versteifungssicken 4 haben vorzugsweise die gleichen geometrischen Abmessungen wie Versteifungssicken in einer herkömmlichen, aus Blech gefertigten Sitzlehnenrückwand, wobei die geometrische Ausformung und eine räumliche Anordnung der Versteifungssicken 4 im Organoblech 2 vorzugsweise in Abhängigkeit der im Betrieb der Sitzlehnenrückwand 1 auftretenden Lastfälle erfolgt.

Auf die Versteifungssicken 4 werden frontseitig vorzugsweise Rippen 10 aufgespritzt. Die Rippen 10 sind vorzugsweise zentral auf den Versteifungssicken 4 angeordnet und in einem Fußbereich derart verbreitert, dass ein sockelartiger Bereich und eine daraus resultierende vergrößerte Kontaktfläche zwischen Fußbereich der Rippe 10 und Versteifungssicke 4 gebildet ist.

Dabei sind die Rippen 10 derart angeordnet, dass sie vorzugsweise die Anschlussgeometrien miteinander verbinden, um Biege- und Torsionskräfte in geeigneter Form zu übertragen.

In der umlaufenden rahmenförmigen Sicke 5 ist rückseitig der Sitzlehnenrückwand 1 eine weitere Rippenstruktur 3 angeordnet, welche vorzugsweise bündig mit der Rückseite der Sitzlehnenrückwand 1 abschließt. Innerhalb der Rippenstruktur 3 sind die einzelnen Rippen 10 vorzugsweise überkreuzt angeordnet.

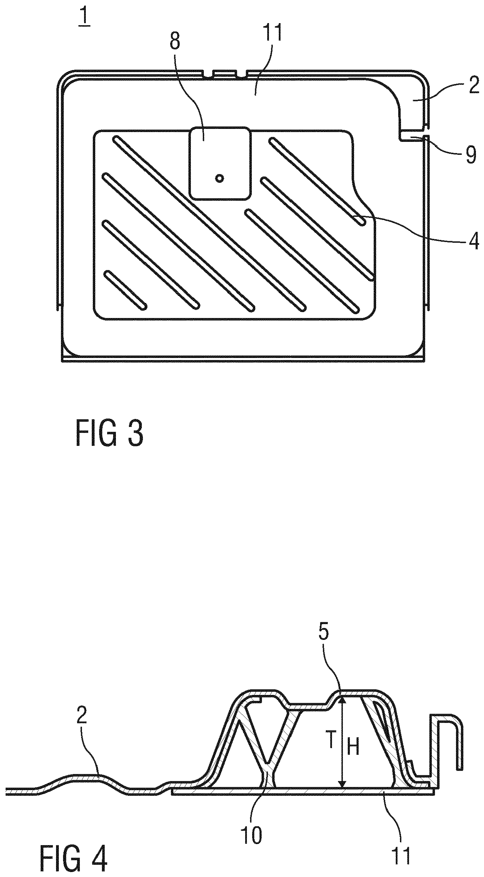

In Figur 3 ist schematisch eine Rückansicht einer mittels des erfindungsgemäßen Verfahrens hergestellten Sitzlehnenrückwand 1 mit einem Abdeckelement 11 dargestellt. Mittels eines solchen, vorzugsweise eben oder plattenförmig ausgebildeten Abdeckelements 11 ist die Rippenstruktur 3 zumindest bereichsweise abdeckbar. Das Abdeckelement 11 kann mit der Rippenstruktur 3 verklebt oder verschweißt werden, wodurch ein geschlossenes Profil entsteht, welches eine erhöhte Torsionssteifigkeit aufweist und somit die gesamte Sitzlehnenrückwand 1 versteift.

Das Abdeckelement 11 kann aus Organoblech sein oder auch aus Strang-, Profil- oder Spritzguss mit gleichwertigem Thermoplast. Bevorzugt wird das Abdeckelement 11 an die Sitzlehnenrückwand 1 und die Rippenstruktur 3 mittels eines herkömmlichen Thermoplastschweißverfahrens, wie beispielsweise Vibrationsschweißen, Induktionsschweißen, Ultraschallschweißen oder Kontaktwarmschweißen, angeschweißt.

In Figur 4 ist schematisch eine Schnittdarstellung einer in der Sitzlehnenrückwand 1 ausgeformten Rippenstruktur 3 dargestellt. Die Rippenstruktur 3 ist aus einer Mehrzahl einzelner Rippen 10 gebildet, deren Höhe H korrespondierend zu einer Tiefe T der rahmenförmigen Sicke 5 ausgebildet ist, so dass rückseitig der Sitzlehnenrückwand 1 eine ebene Fläche ausgebildet ist.

In einer möglichen Ausführungsform können einzelne Rippen 10 entlang ihres Verlaufs verzweigt ausgebildet sein.

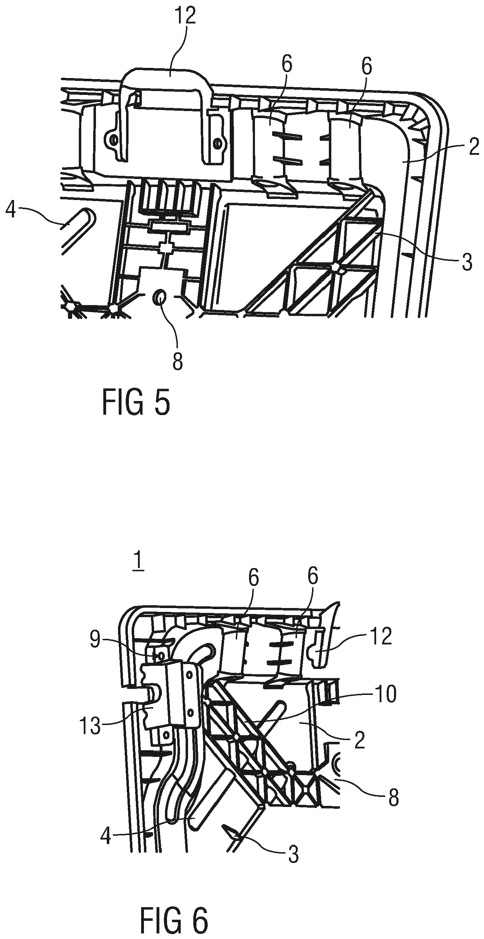

In Figur 5 ist schematisch eine Detailansicht von in der Sitzlehnenrückwand 1 integrierten Kopfstützenhülsen 6 sowie einer daran angeordneten Gurtumlenkung 12 dargestellt. Die Kopfstützenhülsen 6 sind im oberen Bereich der Sitzlehnenrückwand 1 derart in die Rippenstruktur 3 integriert und ausgeformt, dass in ihnen Kopfstützenstangen herkömmlicher, nicht dargestellter Kopfstützen angeordnet werden können. Die Kopfstützenhülsen 6 werden vorzugsweise mittels eines Schiebers im Spritzwerkzeug ausgeformt.

Weiterhin ist im oberen Bereich der Sitzlehnenrückwand 1 ein Aufnahmebereich 7 für eine herkömmliche Gurtumlenkung 12 ausgebildet. Dabei kann die Gurtumlenkung 12 als separates Bauteil auf herkömmliche Weise am Aufnahmebereich 7 angeordnet, beispielsweise verschraubt oder vernietet, werden

In Figur 6 ist schematisch eine Detailansicht von in der Sitzlehnenrückwand 1 integrierten Kopfstützenhülsen 6 sowie eines daran angeordneten Schlossaufnahmebereichs 9 dargestellt. Im oberen Bereich der Sitzlehnenrückwand 1 ist seitlich der Schlossaufnahmebereich 9 derart ausgeformt, dass eine herkömmliche Schlossanbindung 13 daran anordenbar ist. Dabei ist die Schlossanbindung 13 als separates Bauteil ausgebildet und vorzugsweise mittels vier herkömmlicher, nicht dargestellter Schrauben befestigt. Die Rippenstruktur 3 ist im Schlossaufnahmebereich 9 korrespondierend zur Schlossanbindung 13 ausgeformt. Die direkte Anordnung der Schlossanbindung 13 an der Sitzlehnenrückwand 1 ermöglicht eine besonders haltbare und steife Verbindung zwischen beiden Bauteilen und eine gleichmäßige und direkte Krafteinleitung in die Sitzlehnenrückwand 1.

In einem mittleren Bereich der Sitzlehnenrückwand 1 ist die Aufnahme 8 derart ausgeformt, dass eine herkömmliche, nicht dargestellte Gurtaufrollvorrichtung daran anordenbar ist.

Mittels der Schlossanbindung 13, der Gurtumlenkung 12 und/oder der Gurtaufrollvorrichtung werden besonders hohe Kräfte in die Sitzlehnenrückwand 1 eingeleitet. Diese hoch belasteten Bereiche sind durch flächig ausgeformte Hinterspritzungen und/oder Materialverstärkungen verstärkbar. Dabei weisen die Hinterspritzungen und/oder Materialverstärkungen vorzugsweise eine Wandstärke zwischen 1 und 4 mm auf.

### Bezugszeichenliste

- 1: Sitzlehnenrückwand
- 2: Organoblech
- 3: Rippenstruktur
- 4: Versteifungssicken
- 5: Sicke
- 6: Kopfstützenhülse
- 7: Aufnahmebereich
- 8: Aufnahme
- 9: Schlossaufnahmebereich
- 10: Rippe
- 11: Abdeckelement
- 12: Gurtumlenkung
- 13: Schlossanbindung

- H: Höhe
- T: Tiefe

## Patentansprüche

1. Verfahren zur Herstellung einer Sitzlehnenrückwand (1) aus zumindest einem Organoblech (2),
wobei in zumindest einem Organoblech (2) mehrere Versteifungssicken (4) und eine diese umlaufende rahmenförmige Sicke (5) ausgeformt werden und wobei in einem Spritzwerkzeug eine Rippenstruktur (3) in der umlaufenden rahmenförmigen Sicke (5) rückseitig der Sitzlehnenrückwand (1) derart angeformt wird, dass eine Rippenstruktur (3) bündig mit der Rückseite der Sitzlehnenrückwand (1) abschließt, so dass rückseitig der Sitzlehnenrückwand (1) eine ebene Fläche ausgebildet ist, wobei zwischen Organoblech (2) und Rippenstruktur (3) eine stoffschlüssige Verbindung ausgebildet wird, so dass ein einstückiges Bauteil gebildet ist.

2. Verfahren nach Anspruch 1,
**dadurch gekennzeichnet, dass** das Organoblech (2) eine thermo-plastische Matrix umfasst und mit zumindest einer Rippenstruktur (3) aus einem thermoplastischen Kunststoff verbunden wird, welcher mit dem Material des Organoblechs (2) eine stoffschlüssige Verbindung ausbildet.

3. Verfahren nach Anspruch 1 oder 2,
**dadurch gekennzeichnet, dass** ein Querschnitt der Versteifungssicken (4) und der rahmenförmigen Sicke (5) halb- oder teilkreisförmig oder rechteckig mit verrundeten Kanten ausgeformt ist.

4. Verfahren nach einem der vorherigen Ansprüche,
**dadurch gekennzeichnet, dass** innerhalb der Rippenstruktur (3) die einzelnen Rippen (10) überkreuzt angeordnet sind.

5. Verfahren nach einem der vorherigen Ansprüche,
**dadurch gekennzeichnet, dass** die Rippenstruktur (3) zumindest bereichs- oder abschnittsweise mit einem eben oder plattenförmig ausgebildeten Abdeckelement (11) abdeckbar ist, welches stoffschlüssig an Sitzlehnenrückwand (1) und Rippenstruktur (3) angeordnet wird.

6. Verfahren nach Anspruch 5,
**dadurch gekennzeichnet, dass** das Abdeckelement (11) derart mit der innerhalb der rahmenförmigen Sicke (5) angeordneten Rippenstruktur (3) verklebt oder verschweißt ist, dass ein geschlossenes Profil entsteht.

7. Verfahren nach Anspruch 5 oder 6,
**dadurch gekennzeichnet, dass** das Abdeckelement (11) aus einem Organoblech gleichen Materials oder aus einem Strang-, Profil- oder Spritzguss aus einem thermoplastische Kunststoff mit ähnlichen oder vergleichbaren Eigenschaften wie das Material des Organoblechs (2) gebildet wird.

8. Verfahren nach einem der vorherigen Ansprüche,
**dadurch gekennzeichnet, dass** eine Umformung des Organoblechs (2) zur Ausbildung der Versteifungssicken (4) und der umlaufenden rahmenförmigen Sicke (5) direkt im Spritzwerkzeug durchgeführt wird.

9. Verfahren nach einem der vorherigen Ansprüche,
**dadurch gekennzeichnet, dass** einzelne Rippen (10) entlang ihres Verlaufs verzweigt ausgebildet werden.

10. Sitzlehnenrückwand (1) aus zumindest einem Organoblech (2) hergestellt nach einem Verfahren nach einem der Ansprüche 1 bis 9,
wobei in zumindest einem Organoblech (2) mehrere Versteifungssicken (4) und eine diese umlaufende rahmenförmige Sicke (5) ausgeformt sind und eine Rippenstruktur (3) in der umlaufenden rahmenförmigen Sicke (5) rückseitig der Sitzlehnenrückwand (1) derart angeformt ist, dass eine Rippenstruktur (3) bündig mit der Rückseite der Sitzlehnenrückwand (1) abschließt, so dass rückseitig der Sitzlehnenrückwand (1) eine ebene Fläche ausgebildet ist, wobei zwischen Organoblech (2) und Rippenstruktur (3) eine stoffschlüssige Verbindung ausgebildet ist, so dass ein einstückiges Bauteil gebildet ist.

## Claims

1. A method for producing a backrest rear panel (1) from at least one organosheet (2), wherein a plurality of reinforcing beads (4) and a frame-shaped bead (5) which runs around them are shaped in at least one organosheet (2), and a rib structure (3) is being molded in the peripheral frame-shaped bead (5) on the rear side of the backrest rear panel (1) in an injection molding die in such a way that a rib structure (3) terminates flush with the rear side of the backrest rear panel (1), with the result that a planar surface is formed on the rear side of the backrest rear panel (1), an integral joint being formed between the organosheet (2) and the rib structure (3), with the result that a single-piece component is formed.

2. The method as claimed in claim 1, **characterized in that** the organosheet (2) comprises a thermoplastic matrix and is connected to at least one rib structure (3) made from a thermoplastic which forms an integral joint with the material of the organosheet (2).

3. The method as claimed in claim 1 or 2, **characterized in that** a cross section of the reinforcing beads (4) and of the frame-shaped bead (5) is shaped so as to be semicircular or in the shape of a partial circle or rectangular with rounded edges.

4. The method as claimed in one of the preceding claims, **characterized in that** the individual ribs (10) are arranged in a crossed manner within the rib structure (3).

5. The method as claimed in one of the preceding claims, **characterized in that** the rib structure (3) can be covered at least in regions or in sections with a covering element (11) of planar or plate-shaped configuration which is arranged with an integral fit on the backrest rear panel (1) and the rib structure (3).

6. The method as claimed in claim 5, **characterized in that** the covering element (11) is adhesively bonded or welded to the rib structure (3) which is arranged within the frame-shaped bead (5), in such a way that a closed profile is produced.

7. The method as claimed in claim 5 or 6, **characterized in that** the covering element (11) is formed from an organosheet of identical material or from an extruded section, extruded profile or injection molded part made from a thermoplastic with similar or comparable properties to the material of the organosheet (2).

8. The method as claimed in one of the preceding claims, **characterized in that** shaping of the organosheet (2) in order to form the reinforcing beads (4) and the peripheral frame-shaped bead (5) is carried out directly in the injection molding die.

9. The method as claimed in one of the preceding claims, **characterized in that** individual ribs (10) are of branched configuration along their course.

10. A backrest rear panel (1) comprising at least one organosheet (2) produced in accordance with a method as claimed in one of claims 1 to 9, wherein a plurality of reinforcing beads (4) and a frame-shaped bead (5) which runs around them are shaped in at least one organosheet (2), and a rib structure (3) is molded in the peripheral frame-shaped bead (5) on the rear side of the backrest rear panel (1) in such a way that a rib structure (3) terminates flush with the rear side of the backrest rear panel (1), with the result that a planar surface is formed on the rear side of the backrest rear panel (1), an integral joint is formed between the organosheet (2) and the rib structure (3), with the result that a single-piece component is formed.

## Revendications

1. Procédé pour fabriquer une paroi arrière (1) d'un dossier de siège à partir d'au moins une tôle organique (2),
plusieurs moulures de renforcement (4) et une moulure en forme de cadre (5) entourant celles-ci étant formées dans au moins une tôle organique (2), et une structure nervurée (3) étant façonnée dans un outil d'injection dans la moulure périphérique en forme de cadre (5) du côté arrière de la paroi arrière (1) du dossier de siège de telle sorte qu'une structure nervurée (3) se termine en affleurement avec le côté arrière de la paroi arrière (1) du dossier de siège, de telle sorte que du côté arrière de la paroi arrière (1) du dossier de siège soit réalisée une surface plane, une connexion par liaison de matière étant réalisée entre la tôle organique (2) et la structure nervurée (3), de telle sorte qu'un composant monobloc soit formé.

2. Procédé selon la revendication 1,
**caractérisé en ce que** la tôle organique (2) comprend une matrice thermoplastique et est connectée à au moins une structure nervurée (3) constituée d'un plastique thermoplastique qui constitue avec le matériau de la tôle organique (2) une connexion par liaison de matière.

3. Procédé selon la revendication 1 ou 2,
**caractérisé en ce qu'**une section transversale des moulures de renforcement (4) et de la moulure en forme de cadre (5) est formée sous forme semi-circulaire ou partiellement circulaire ou rectangulaire avec des bords arrondis.

4. Procédé selon l'une quelconque des revendications précédentes,
**caractérisé en ce qu'**à l'intérieur de la structure nervurée (3), les nervures individuelles (10) sont disposées de manière croisée.

5. Procédé selon l'une quelconque des revendications précédentes,
**caractérisé en ce que** la structure nervurée (3) peut être recouverte au moins en partie ou par portions par un élément de recouvrement (11) réalisé sous forme plane ou en forme de plaque, qui est disposé par liaison de matière contre la paroi arrière (1) du dossier de siège et contre la structure nervurée (3).

6. Procédé selon la revendication 5,
**caractérisé en ce que** l'élément de recouvrement (11) est collé ou soudé à la structure nervurée (3) disposée à l'intérieur de la moulure en forme de cadre (5) de telle sorte que l'on obtienne un profilé fermé.

7. Procédé selon la revendication 5 ou 6,
**caractérisé en ce que** l'élément de recouvrement (11) est formé à partir d'une tôle organique dans le même matériau ou à partir de coulée continue ou d'un profilé coulé ou par moulage par injection à partir d'un plastique thermoplastique ayant des propriétés similaires ou comparables au matériau de la tôle organique (2).

8. Procédé selon l'une quelconque des revendications précédentes,
**caractérisé en ce qu'**une déformation de la tôle organique (2) pour réaliser les moulures de renforcement (4) et la moulure périphérique en forme de cadre (5) est effectuée directement dans l'outil d'injection.

9. Procédé selon l'une quelconque des revendications précédentes,
**caractérisé en ce que** des nervures individuelles (10) sont réalisées de manière ramifiée le long de leur étendue.

10. Paroi arrière (1) de dossier de siège constituée d'au moins une tôle organique (2) fabriquée selon un procédé selon l'une quelconque des revendications 1 à 9, plusieurs moulures de renforcement (4) et une moulure (5) en forme de cadre entourant celles-ci étant formées dans au moins une tôle organique (2) et une structure nervurée (3) étant façonnée dans la moulure périphérique en forme de cadre (5) du côté arrière de la paroi arrière (1) du dossier de siège, de telle sorte qu'une structure nervurée (3) se termine en affleurement avec le côté arrière de la paroi arrière (1) du dossier de siège de telle sorte que du côté arrière de la paroi arrière (1) du dossier de siège soit réalisée une surface plane, une connexion par liaison de matière étant réalisée entre la tôle organique (2) et la structure nervurée (3) de telle sorte qu'un composant monobloc soit formé.
